# EUROPÄISCHE PATENTSCHRIFT

(11) **EP 0 553 753 B1**
(45) Veröffentlichungstag und Bekanntmachung des Hinweises auf die Patenterteilung: **26.03.1997**
(21) Anmeldenummer: 93101108.4
(22) Anmeldetag: 26.01.1993
(51) Int. Cl.: H04M 3/42, H04Q 3/10, H04Q 3/545

(54) **Fernsprechnebenstellenanlage mit Sammelanschluss**
Private branch exchange with grouped lines
Central téléphonique privé avec lignes groupées

(30) Priorität: 31.01.1992 DE 4202816
(43) Veröffentlichungstag der Anmeldung: 04.08.1993
(73) Patentinhaber: SIEMENS AKTIENGESELLSCHAFT, 80333 München (DE)
(72) Erfinder: Drobek, Erich, W-8025 Unterhaching (DE)

(56) Entgegenhaltungen:
- DE-A- 2 837 856
- DE-A- 3 047 851
- DE-B- 2 312 904

## Beschreibung

Es sind unterschiedliche Fernsprechnebenstellenanlagen bekannt, die neben der eigentlichen Vermittlungssteuerung auch zu einer Steuerung bzw. Realisierung zusätzlicher, über den eigentlichen Vermittlungsvorgang hinausgehender Steuervorgänge befähigt sind. Solche zusätzlichen Funktionen werden im allgemeinen als Leistungsmerkmale bezeichnet, wobei hierbei insbesondere für den Kommunikationsdienst "Sprache" eine große Zahl unterschiedlicher Leistungsmerkmale bekannt ist. Zu solchen Leistungsmerkmalen zählen beispielsweise die Darstellung von Bedienerhinweisen auf optischen Anzeigeeinrichtungen der Endgeräte, Anrufumleitung (Call forwarding) und das Zusammenfassen interner Endgeräte zu Sammelanschlüssen.

Aus den Produktschriften der Fa. Siemens "HICOM 600 System Product Data", Bestell-Nr. A19100-K 3161-G430-01-7600 (Seite 19), und "ISDN in the Office", Special Issue of Telcom Report and Siemens Magazin COM, Seiten 56 bis 64, ISBN 3-8009-3849-9 ist bereits eine rechnergesteuerte Fernsprechnebenstellenanlage bekannt, bei der sowohl analoge als auch digitale Terminals zu Sammelanschlüssen innerhalb eines Kommunikationsdienstes zusammengefaßt werden können. Der Sammelanschluß ist unter einer besonderen Sammelanschlußnummer von intern und von extern erreichbar, wobei jeder Sammelanschlußteilnehmer zusätzlich unter seiner persönlichen Rufnummer erreicht werden kann. Der Sammelanschluß läßt sich linear oder zyklisch festlegen: Die Suche nach einer freien Endstelle beginnt immer bei der ersten Nebenstelle eines Sammelanschlusses oder bei der nächsten Nebenstelle nach Entgegennahme eines Anrufs. Sind beispielsweise alle Sprachendgeräte des Sammelanschlusses belegt, gelangen weitere Anrufe zu einem Wartespeicher, gegebenenfalls auch zu einer sogenannten Sammelanschluß-Infobox, in der Anrufer ihre Mitteilungen dann dort hinterlegen können. Ausgestaltungen des Leistungsmerkmals "Sammelanschluß" sind auch aus den deutschen Offenlegungsschriften 28 17 985, 28 37 856, 30 47 851 und 34 43 472 bekannt.

Die Leistungsfähigkeit eines Sammelanschlusses hängt zum einen von der Zahl der zu einer Sammelanschlußgruppe zusammengefaßten internen Endgeräte und andererseits von der Anzahl der Anrufe ab, die gleichzeitig dem Sammelanschluß zugeführt werden können, um gegebenenfalls nach einer Haltezeit auf freie Sammelanschlußendgeräte umgekoppelt zu werden. Bei bekannten Fernsprechnebenstellenanlagen ist die Zahl der zu einer Sammelanschlußgruppe zusammengefaßten internen Endgeräte konstant bzw. nur durch ein besonderes betriebstechnisches Kommando manuell konfigurierbar. Dies gilt auch für eine aus der deutschen Auslegeschrift 27 32 981 bekannte Fernmeldeanlage mit einem Sammelanschluß, wobei sich jede Sprechstelle des Sammelanschlusses bei Bedarf von der Einbeziehung in den Sammelanschluß vorübergehend freischalten kann ("logoff"), wenn z. B. die Sprechstelle nicht besetzt ist oder die Bedienperson andere Arbeiten zu erledigen hat. Eine freigeschaltete Sprechstelle wird bei der Frei-Besetzt-Prüfung der Sammelanschlußstellen im Falle eines ankommenden Anrufs übersprungen. Um einer Kontrollstelle eine Übersicht über den Status der Sprechstellen des Sammelanschlusses zu geben, wird der Kontrollstelle ein durch die vorübergehende Freischaltung ausgelöstes Aufmerksamkeitszeichen signalisiert. Bei der bekannten Fernmeldeanlage können sich zwar Sprechstellen des Sammelanschlusses vorübergehend freischalten, die Zahl der zum Sammelanschluß zusammengefaßten aktiven, d. h. nicht freigeschalteten und der schalteten Sprechstellen ist jedoch fest.

Der Erfindung liegt die Aufgabe zugrunde, eine Fernsprechnebenstellenanlage mit einem Sammelanschluß der eingangs genannten Art anzugeben, der unterschiedlichen Verkehrsbelastungen gerecht wird.

Die Lösung dieser Aufgabe erfolgt erfindungsgemäß mit den kennzeichnenden Merkmalen des Patentanspruchs 1. Als wesentlich für die Erfindung ist anzusehen, daß die Zahl der zu einer Sammelanschlußgruppe zusammengefaßten internen Endgeräte der Fernsprechnebenstellenanlage im laufenden Betrieb dynamisch verändert wird. Bei Verkehrsspitzen läßt sich die Wartezeit der dem Sammelanschluß zugeführten Anrufe verkürzen; die Wahrscheinlichkeit, daß wartende Anrufer vor der Umkoppelung auf ein freies Endgerät des Sammelanschlusses die Verbindung lösen, wird gemindert. Andererseits werden in verkehrsschwachen Seiten ein Teil der Endgeräte des Sammelanschlusses aus dem Sammelanschluß herausgenommen und damit entlastet.

Eine Ausführungsform der Erfindung wird nun anhand der Figuren beschrieben. Es zeigen
Figur 1 eine erfingungsgemäße Fernsprechnebenstellenanlage mit zu einem Sammelanschluß zusammengefaßten internen Endgeräten,
Figur 2 ein Flußdiagramm eines mit der Fernsprechnebenstellenanlage nach Figur 1 durchführbaren Verfahrens und
Figuren 3 und 4 Darstellungen auf einem dem Sammelanschluß zugeordneten Datensichtgerät, welche signifikante, das Verfahren nach Figur 2 bezeichnende Werte zeigen.

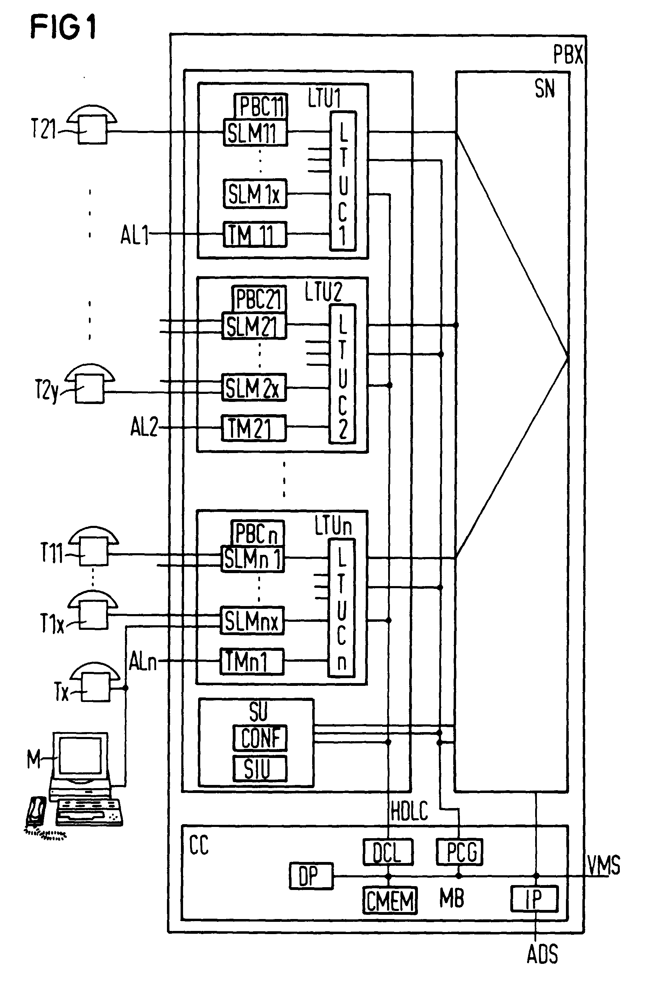

Die in Figur 1 dargestellte Fernsprechnebenstellenanlage kann wie die in den eingangs beschriebenen Produktschriften offenbarte Nebenstellenanlage bzw. wie das Fernmeldevermittlungssystem strukturiert sein, das in den veröffentlichten europäischen Patentanmeldungen EP 0 306 693 A1 (US-PS 4,903,258), EP 0 303 870 A2 (US-PS 5,018,097) und EP 0 303 869 A1 (US-PS 5,047,923) offenbart ist. Der Software-Architektur des bekannten Systems liegen die folgenden Kriterien zugrunde: Das erste Architektur-Kriterium betrifft die Dreiteilung der Vermittlungs-Software in die Funktionskomplexe Peripherietechnik PP (peripheral processing), Leitungstechnik DH (device handler) und Vermittlungstechnik CP (call processing). Dabei nimmt die Peripherietechnik PP die Transportfunktion wahr und läuft im wesentlichen auf den Anschlußbaugruppen für die Endgeräte und Leitungen. Die Leitungstechnik DH hat die Aufgabe, die Schnittstelle zu Peripherietechnik PP an die ISDN-Schnittstellen zur Vermittlungstechnik CP anzupassen. Die Vermittlungstechnik CP erbringt die eigentlichen Leistungen für die Benutzeroberflächen der Endgeräte bzw. für die Schnittstellen zu den verschiedenen Sätzen.

Das zweite Architektur-Kriterium stellt die an Dienste und Endgeräten orientierte Zustands- bzw. Anreizverarbeitung in der Vermittlungstechnik CP dar. Das Dienstekriterium wird als ISDN-Protokollelement der Steuerungs-Software angeboten, die dienstspezifisch aufgrund der mitgelieferten Geräteadresse den Gerätetyp ermittelt.

Das dritte Architektur-Kriterium zur einfachen Behandlung der Endgeräte- und Dienstevielfalt besteht in der strikten Anwendung der eigenständigen Datenbasis, auf welche die Programme prinzipiell nur auf logischer Ebene zugreifen.

Die in der Figur 1 dargestellte Anlage besteht aus einer Systemzentrale PBX mit einem Steuerwerk CC, das mit sogenannten Peripheriemodulen und einem Koppelnetz SN verbindbar ist. Die Peripheriemodule umfassen insbesondere Teilnehmeranschlußschaltungen SLM11...SLM1X, SLM21...SLM2X, SLMn1...SLMnX sowie sogenannte Leitungssatzschaltungen TM11, TM21 und TMn1.

Die Teilnehmeranschlußschaltungen SLM sind teilnehmerorientierte Geräteanschlüsse, wie beispielsweise ISDN-Basisanschlüsse für digitale mono- und multifunktionale Endgeräte, 1-Kanal-Anschlußmodule für Endgeräte, wie digitale Sprachendgeräte und Vermittlungsendgeräte sowie Teilnehmeranschlüsse für analoge Sprachendgeräte. Die in Figur 1 dargestellten Endgeräte T11, T1X, T21, T2y, TX sind vorzugsweise digitale Sprachendgeräte, während das Endgerät M ein Datenendgerät darstellt. Wie noch beschrieben wird, sind die ersten internen Endgeräte ursprünglich dem Sammelanschluß zugeordnet, wobei zusätzlich auch zweite Endgeräte T21...T2y dem Sammelanschluß im laufenden Betrieb zugeordnet werden können. Weiterhin kann mindestens für einen Teil der ersten und/oder zweiten internen Endgeräte T11...T1X, T21...T2y die Zuordnung zum Sammelanschluß im laufenden Betrieb aufgehoben werden.

Die Leitungssatzschaltungen TM11, TM21, TMn1 dienen zur Verbindung mit öffentlichen und/oder privaten Netzen bzw. Sondereinrichtungen und sind beispielsweise ISDN-Basisanschlüsse für ISDN-Amtsverkehr (Amtsleitungen AL1, AL2, ALn) und ISDN-Querverkehr (2 Kanäle zu 64 kBit/s und ISDN-Signalisierung) sowie digitale Schnittstelleneinheiten (digital interface unit), d. h. Multiplexanschlüsse (30 Kanäle zu je 64 kBit/s) mit den Betriebsarten Amts- und Querverkehr mit ISDN-Signalisierung, Querverkehr mit kanalassoziierter Signalisierung.

Alle Peripheriemodule SLM11..., TM11... haben die gleichen systeminternen Schnittstellen. Sie koppeln die einzelnen Basiskanäle B, auf denen Nutzdaten, d. h. Sprach- und/oder Dateninformationen übertragen werden, an eine beliebige Auswahl aus zwei Multiplexkanälen (highways) mit beispielsweise 32 Kanälen des Koppelnetzes SN und übergeben die in einem Steuerkanal D übertragenen Signalisierungsinformationen als HDLC-Protokoll an die Steuerung CC. Jedes Peripheriemodul weist eine Steuerung PBC11... auf, deren Aufgabe es ist, belegte Anschlußkanäle zu ausgewählten Kanälen der Multiplexkanäle gegebenenfalls mit einer Steuerung LTUC1... einer zugehörigen Anschlußeinheit LTU1... zuzuordnen (europäische Patente 0 113 884 und 0 264 890, US-Patent 4,694,452).

Mehrere Peripheriemodule können funktionell zu einer Anschlußeinheit LTU zusammengefaßt werden. Jeder Anschlußeinheit LTU1 ...LTUn ist eine Steuerung LTUC1...LTUCn zugeordnet und mit dem Koppelnetz SN über beispielsweise vier Sprach-Daten-Multiplexkanäle miteinander verbunden. Der Meldungsaustausch zwischen den Peripheriemodulen und der Steuerung CC erfolgt über einen Signalisierungskanal, der in Figur 1 mit dem Bezugszeichen HDLC bezeichnet ist, im bekannten HDLC-Punkt- zu -Mehrpunkt-Verfahren.

Mehreren Anschlußeinheiten LTU1...LTUn kann eine sogenannte Serviceeinheit SU zugeordnet sein. Diese umfaßt eine Signalisierungseinheit SIU und gegebenenfalls eine Konferenzeinrichtung CONF. Die Signalisierungseinheit SIU übernimmt die Zeichenversorgung des Systems mit Hörtönen und gegebenenfalls mit Ansagen, sowie den Empfang von MFV-Taktwahlzeichen und Amtswähltönen. Diese Funktion wird in an sich bekannter Weise mit Signalprozessoren realisiert.

Die Signalisierungseinheit SIU ist über zwei Sprach-Daten-Multiplexkanäle bei fester Funktionszuordnung mit dem Koppelnetz SN verbunden.

Das Koppelnetz SN ist vorzugsweise modular aufgebaut und besteht beispielsweise aus einer blockierungsfreien Zeitstufe für 16-Sprach-Daten-Multiplexkanäle. Durch Zusammenschalten zweier derartiger Grundmodule entsteht eine Koppelstufe für 1024 Zeitlagen (32 Multiplexkanäle zu je 32 Kanälen). Die in dieser Weise gebildete blockierungsfreie Zeitstufe verbindet von den je 32 ankommenden und abgehenden Multiplexkanälen für Sprache oder Daten jeweils zwei beliebige der 32 Zeitlagen miteinander. Neben 1-Kanal-Verbindungen können auch Breitbandverbindungen hergestellt werden.

Das Steuerwerk CC übernimmt im Zusammenwirken mit den Steuerungen PCB11...,LTUC1... die entsprechend dem Peripherieaufbau anfallende vermittlungstechnische Verarbeitung. Es besteht aus einem Datenprozessor DP, einem Prozessor für Signalisierungssteuerung DCL, einem Taktgenerator PCG, einem Speicher CMEM und einem Schnittstellenprozessor IP, der mit einer in Figur 1 nicht dargestellten betriebstechnischen Einheit ADS verbunden ist. Der Speicher CMEM enthält eine Datenbasis mit Konfigurationsdaten, zu denen die Zuordnung der Endgeräte T11...T1x, Tx, T21...T2y zum Sammelanschluß gehört. Die genannten Komponenten sind über einen Multibus MB wie in der Figur dargestellt miteinander verbunden.

Für den Datenprozessor DP werden vorzugsweise Prozessoren der Reihe SAB 8086/80286 (Fa. Siemens) verwendet. Der Speicher CMEM enthält hochintegrierte dynamische RAM-Bausteine und lerkorrekturschaltungen.

Der Prozessor DCL für Signalisierungssteuerung dient dem Abwickeln des HDLC-Protokolls zu den Anschlußeinheiten LTU1... LTUn und der Serviceeinheit SU.

Der Taktgenerator PCG führt die Taktversorgung der Fernmeldenebenstellenanlage durch.

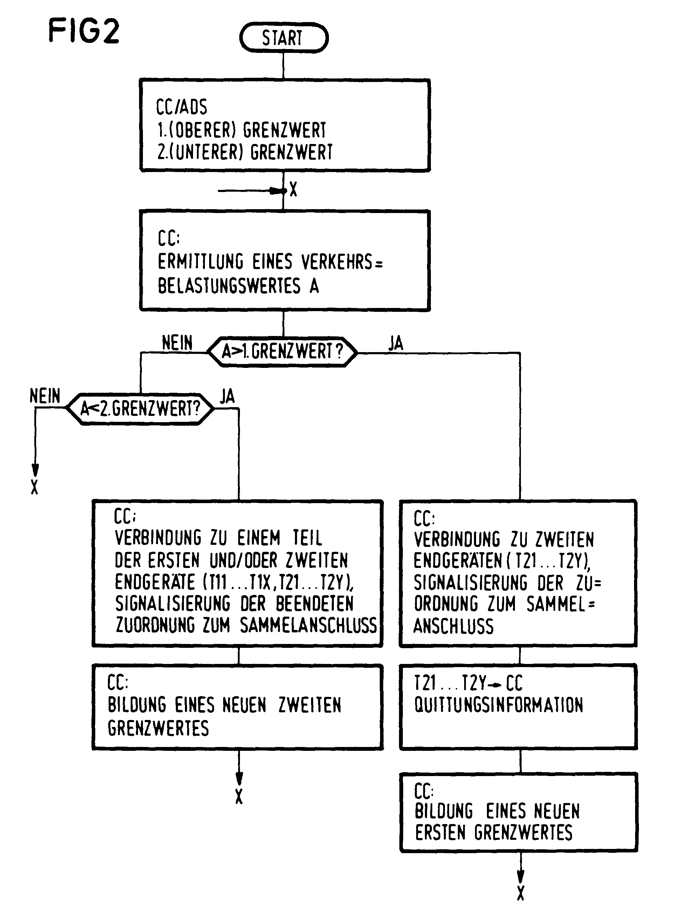

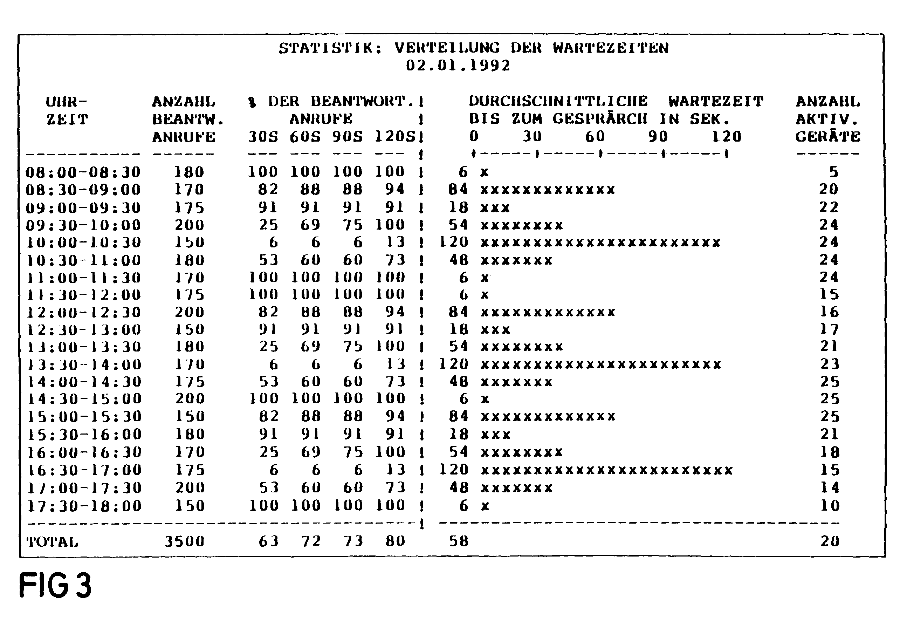

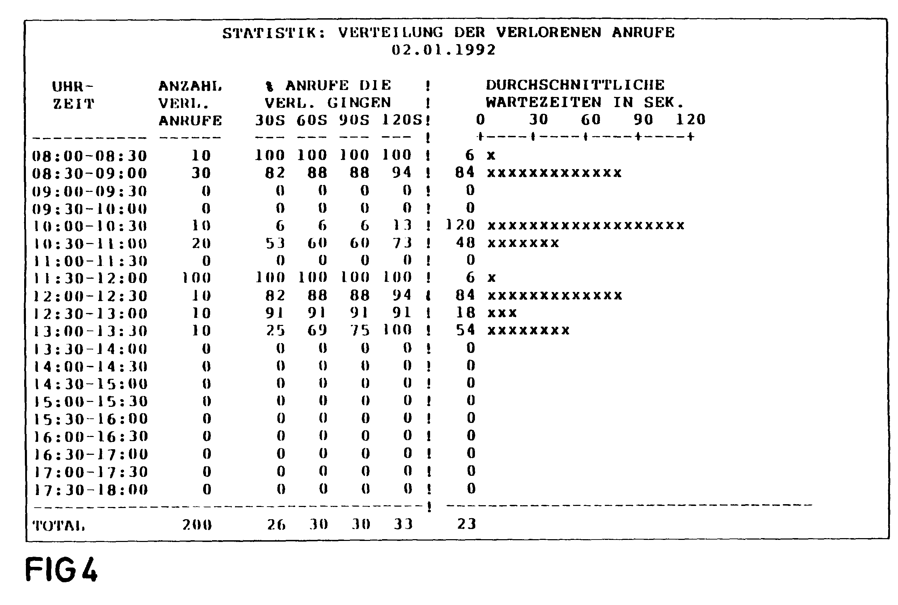

Bei der in der Figur 1 dargestellten Fernsprechnebenstellenanlage sind ursprünglich beispielsweise 15 erste Endgeräte T11 ...T1x einem Sammelanschluß zugeordnet, während die restlichen, zweiten internen Endgeräte T21...T2y der Fernsprechnebenstellenanlage ursprünglich dem Sammelanschluß nicht zugeordnet sind. Das Fernsprechendgerät Tx und gegebenenfalls ein Datensichtgerät M sind einem Aufsichtsplatz des Sammelanschlusses zugeordnet. Der Steuerung CC, die dem Sammelanschluß zugeordnet ist, wird beispielsweise über die betriebstechnische Einheit ADS oder ein Endgerät (Tx) eine erste Information zugeführt, die einen ersten (oberen) Grenzwert für einen die Verkehrsbelastung am Sammelanschluß bezeichnenden Wert bezeichnet, sowie eine zweite Information, die einen zweiten (unteren) Grenzwert für den die Verkehrsbelastung am Sammelanschluß bezeichnenden Wert A bezeichnet (Figur 2). Die Steuerung CC ermittelt im laufenden Betrieb für vorgegebene Zeiträume diesen Wert A. Dieser Verkehrsbelastungwert A bezeichnet beispielsweise die durchschnittliche Wartezeit der am Sammelanschluß anstehenden Anrufe bis zur Umkopplung auf ein freies Endgerät bzw. bis zum Gesprächsbeginn (Figur 3), die Zahl der Anrufe, die am Sammelanschluß in eine Wartestellung geführt worden sind, weil entweder die ersten internen Endgeräte besetzt sind oder aber im Freizustand keinen Anruf übernehmen, oder die Zahl der verlorenen Anrufe (Figur 4).

Beispielsweise wird für den Wert A die durchschnittliche Wartezeit tezeit gewählt, wobei in Figur 3 die durchschnittliche der zu einem Gespräch geführten Anrufe und in Figur 4 die durchschnittliche Wartezeit der nicht zu einem Gespräch geführten Anrufe dargestellt ist. Der Wert A ergibt sich aus diesen beiden Wartezeiten. Als erster Grenzwert wird beispielsweise 30 Sekunden und als zweiter Grenzwert 15 Sekunden bestimmt.

Die Steuerung CC vergleicht nun die ermittelte Zahl A (z. B. 35 Sekunden) mit einem ersten vorliegenden Grenzwert (30 Sekunden). Ergibt sich dabei, daß die Zahl A wie hier den ersten Grenzwert überschreitet, so bestimmt die Steuerung CC die Anzahl anzuschaltender weiterer Endgeräte (z. B. zwei zweite Endgeräte), greift auf die im Speicher CMEM abgespeicherten Konfigurationsdaten zu und ermittelt zweite Endgeräte, die bisher nicht dem Sammelanschluß zugeordnet waren. Anschließend stellt die Steuerung zu den ausgewählten zweiten Endgeräten T21 und T2y, die bisher dem Sammelanschluß nicht zugeordnet waren, eine Verbindung her und signalisiert diesen Endgeräten im Rahmen der hergestellten Verbindung die Neuzuordnung zum Sammelanschluß. Die Signalisierung kann auf den Displays der digitalen Endgeräte T21, T2y in alphanumerischer Form, durch Aktivierung eines Leuchtelements, durch eine Standardsprachansage ("prompt") und/oder durch einen Sonderklingelton erfolgen. Die Neuzuordnung zweiter Endgeräte zum Sammelanschluß wird erst aktiviert, wenn die betreffenden Endgeräte der Steuerung CC eine Quittungsinformation übermitteln. Damit wird sichergestellt, daß die Bedienpersonen der betreffenden zweiten Endgeräte anwesend sind bzw. daß die Bedienpersonen für Aufgaben im Zusammenhang mit dem Sammelanschluß zur Verfügung stehen. Nachdem die Neuzuordnung aktiviert ist, werden am Sammelanschluß eintreffende Anrufe auf die ersten und zweiten Endgeräte (insgesamt hier 15 + 2 = 17) umgekoppelt. Gegebenenfalls bildet die zentrale Steuerung einen neuen ersten Grenzwert, insbesondere wenn die Zahl der wartenden Anrufe für die Zahl A gewählt wird, die dann die Zahl der aktivierten Sammelanschlußendgeräte nicht berücksichtigt.

Die Steuerung CC vergleicht weiterhin die ermittelte Zahl A (z. B. 8 Sekunden) mit dem zweiten (unteren) Grenzwert (15 Sekunden). Ergibt sich dabei, daß die Zahl A den zweiten Grenzwert unterschreitet, so bestimmt die Steuerung die Anzahl zu deaktivierender Endgeräte (z. B. drei Endgeräte) und stellt zu diesem Teil der 17 ersten und/oder zweiten Endgeräte (T11... T1x, T21...T2y) eine Verbindung her und signalisiert diesen Endgeräten im Rahmen der hergestellten Verbindung, daß die ursprüngliche Zuordnung zum Sammelanschluß beendet ist. Beim Sammelanschluß eintreffende Anrufe werden nicht mehr auf diese drei internen Endgeräte umgekoppelt. Gegebenenfalls bildet die zentrale Steuerung CC einen neuen zweiten Grenzwert, wobei das für den neuen1. Grenzwert Gesagte entsprechend gilt.

Der Verkehrsbelastungswert A wird fortlaufend ermittelt und mit beiden Grenzwerten verglichen, wobei die beiden Vergleichsprüfungen der Zahl A mit dem ersten bzw. zweiten Grenzwert in der genannten Reihenfolge (Figur 2) durchgeführt werden. Es kann jedoch auch eine andere Reihenfolge der gleichsprüfungen vorgesehen sein.

Der Verkehrsbelastungswert A ist neben der in den Figuren 3 und 4 dargestellten Form auch in anderer Weise auf dem Datensichtgerät M darstellbar. So wird auf dem Datensichtgerät M ein erstes Symbol (z. B. roter Kreis) angezeigt, wenn der Verkehrsbelastungswert A den ersten Grenzwert überschreitet (die Zahl der zum Sammelanschluß zusammengefaßten Endgeräte ist zu gering). Ein zweites Symbol (z. B. gelber Kreis) wird auf dem Datensichtgerät M angezeigt, wenn der Verkehrsbelastungswert A den zweiten Grenzwert unterschreitet (die Zahl der zum Sammelanschluß zusammengefaßten Endgeräte ist zu hoch) und ein drittes Symbol (z. B. grüner Kreis) wird auf dem Datensichtgerät M angezeigt, wenn der Verkehrsbelastungwert A zwischen dem ersten und zweiten Grenzwert liegt (die Zahl der zum Sammelanschluß zusammengefaßten Endgeräte ist optimal).

Die Fernsprechnebenstellenanlage kann neben der Steuerung CC eine zweite Steuerung aufweisen, die insbesondere auf einem adaptiven Server implementiert ist. Dabei kann vorgesehen sein, daß ein der Steuerung CC zugeordnetes Steuerungsprogramm die Grundprozeduren im Zusammenhang mit dem Sammelanschluß durchführt (Umkoppeln anstehender Anrufe auf Sammelanschlußendgeräte), während die zweite Steuerung die Prozeduren im Zusammenhang mit der dynamischen Zuordnung der Endgeräte zum Sammelanschluß sowie die Ermittlung und Anzeige der Verkehrsbelastungszahl A und weiterer Verkehrswerte auf dem Datensichtgerät M realisiert. Für den Meldungsverkehr zwischen der Steuerung CC und der zweiten Steuerung kann eine bekannte Dialogsoftwareschnittstelle für den Meldungsverkehr zwischen einer Fernmeldenebenstellenanlage und einer externen Datenverarbeitungsanlage (PC) verwendet werden.

## Patentansprüche

1. Fernsprechnebenstellenanlage mit Sammelanschluß und einer dem Sammelanschluß zugeordneten Steuerung (CC), die dem Sammelanschluß zugeführte Anrufe auf erste interne Endgeräte (T11...T1x) der Fernsprechnebenstellenanlage gegebenenfalls nach einer Wartezeit umkoppelt,
**dadurch gekennzeichnet,**
daß ein der Steuerung (CC) zugeordnetes Steuerungsprogramm in der Weise ausgestaltet ist, daß ein die Verkehrsbelastung am Sammelanschluß bezeichnender Wert (A), z. B. die Zahl der dem Sammelanschluß zugeführten und nicht auf die ersten internen Endgeräte (T11... T1x) umgekoppelten Anrufe, oder die durchschnittliche Wartezeite dieser Anrufe, für einen Zeitraum ermittelt und mit einem ersten vorgebbaren Grenzwert verglichen wird, und daß die Steuerung (CC), wenn der Verkehrsbelastungswert (A) den ersten Grenzwert überschreitet, zweiten internen Endgeräten (T21... T2y) deren Zuordnung zum Sammelanschluß signalisiert.

2. Fernsprechnebenstellenanlage nach Anspruch 1,
**dadurch gekennzeichnet,**
daß die Steuerung (CC) dem Sammelanschluß zugeführte Anrufe auf die zweiten internen Endgeräte (T21...T2y) umkoppelt, nachdem die zweiten internen Endgeräte (T21...T2y) der Steuerung (CC) eine Quittungsinformation übermittelt haben.

3. Fernsprechnebenstellenanlage nach Anspruch 1 oder 2,
**dadurch gekennzeichnet,**
daß das der Steuerung (CC) zugeordnete Steuerungsprogramm in der Weise ausgestaltet ist, daß der Verkehrsbelastungswert (A) mit einem zweiten vorgebbaren Grenzwert verglichen wird, und daß die Steuerung (CC), wenn der Verkehrsbelastungswert (A) den zweiten Grenzwert unterschreitet, einem Teil der ersten und/oder zweiten Endgeräte (T11...T1x, T21...T2y) die Aufhebung der Zuordnung zum Sammelanschluß signalisiert.

## Claims

1. Private branch exchange with line group and a controller (CC) which is assigned to the line group and reconnects calls fed to the line group to first internal terminals (T11...T1x) of the private branch exchange, if appropriate after a waiting time, characterized in that a control programme which is assigned to the controller (CC) is configured in such a way that a value (A) which designates the traffic loading on the line group, for example the number of calls which have been fed to the line group and not reconnected to the first internal terminals (T11...T1x) or the average waiting time of these calls, is determined for a time period and compared with a first prescribable limit value, and in that, if the traffic loading value (A) exceeds the first limit value, the controller (CC) signals to second internal terminals (T21... T2y) their assignment to the line group.

2. Private branch exchange according to Claim 1, characterized in that the controller (CC) reconnects calls fed to the line group to the second internal terminals (T21...T2y), after the second internal terminals (T21...T2y) have transmitted an item of acknowledgement information to the controller (CC).

3. Private branch exchange according to Claim 1 or 2, characterized in that the control programme which is assigned to the controller (CC) is configured in such a way that the traffic loading value (A) is compared with a second prescribable limit value, and, if the traffic loading value (A) falls below the second limit value, the controller (CC) signals to a portion of the first and/or second terminals (T11...T1x, T21...T2y) the cancellation of the assignment to the line group.

## Revendications

1. Central privé comportant un raccordement collectif et une commande CC, qui est associée au raccordement collectif et qui commute des appels envoyés au raccordement collectif sur des premiers terminaux internes (T11 à T1x) du central privé éventuellement après un temps d'attente,
caractérisé en ce que
un programme de commande associé à la commande (CC) est formé de telle sorte qu'une valeur (A) désignant l'intensité de trafic sur le raccordement collectif, par exemple le nombre des appels envoyés au raccordement collectif et non commuté sur les premiers terminaux internes (T11 à T1x) ou les temps d'attente moyens de ces appels, est déterminée pour un laps de temps et est comparée à une première valeur limite pouvant être prescrite, et la commande (CC) signale, lorsque la valeur (A) d'intensité de trafic est supérieure à la première valeur limite, à des seconds terminaux internes (T21 à T2y), leur association au raccordement collectif.

2. Central privé suivant la revendication 1,
caractérisé en ce que
la commande CC commute des appels envoyés au raccordement collectif sur les seconds terminaux internes (T21 à T2y), après que les seconds terminaux internes (T21 à T2y) ont transmis à la commande (CC) une information d'accusé de réception.

3. Central privé suivant la revendication 1 ou 2,
caractérisé en ce que
le programme de commande associé à la commande (CC) est formé de telle sorte que la valeur (A) d'intensité de trafic soit comparée à une seconde valeur limite pouvant être prescrite et la commande (CC) signale, lorsque la valeur (A) d'intensité de trafic est inférieure à la seconde valeur limite, à une partie des premiers et/ou seconds terminaux (T11 à T1x, T21 à T2y), la cessation de l'association au raccordement collectif.
